# EUROPEAN PATENT APPLICATION

(11) **EP 2 952 518 A1**
(43) Date of publication of application: **09.12.2015**
(21) Application number: 14171223.2
(22) Date of filing: 05.06.2014
(51) Int. Cl.: C07F 9/54, H01G 11/62, H01M 10/05

(54) **Organic Phosphonium Salts, a Method for their Preparation, and their Use in Electrochemical Systems**

(71) Applicant: Cytec Canada Inc., Niagara Falls, Ontario L2E 6S5 (CA)
(72) Inventor: Nucciarone, Donato, STONEY CREEK, Ontario ON L8E 4N3 (CA); Zavorine, Serguei I., ST. CATHARINES, Ontario ON L2T 3B1 (CA); Whitbread, Kristina M., WELLAND, Ontario ON L3C 5R7 (CA); Moser, Michael, NIAGARA FALLS, Ontario ON L2H 0A3 (CA)
(74) Representative: Deckers, Hellmuth Alexander

(57) **Abstract**

The invention relates to a phosphonium salt of formula I: R¹ R² R³ R⁴ P⁺ A⁻, where the anions A⁻ are selected from the group consisting of bis(fluorosulfonyl)imide and bis(trifluoromethylsulfonyl)imide, tetrafluoroborate, hexafluorophosphate, hexafluoroarsenate, hexafluoroantimonate, perchlorate, trifluoromethanesulfonate, toluenesulfonate, methanesulfonate, iodide, tricyanomethanide, trifluoromethyltrifluoroborate, heptafluoropropanesulfonate, sulfate, trifluoroacetate, heptafluorobutyrate, cyanocyanamide, dialkylphosphates, and phosphonate anions where the substituents R¹ and R² are methyl groups, R³ is selected from the group consisting of C₁- to C₈-alkyl groups, and R⁴ is selected from the group consisting of C₁- to C₈-alkyl groups, which alkyl groups may be linear, branched or cyclic, wherein R³ and R⁴ are preferably different from each other, or may form a ring together with the phosphorus atom, to mixtures comprising at least of these salts, to electrolytes prepared therefrom, and to applications thereof in electrochemical devices, particularly batteries and electrochemical capacitors.

## Description

### Field of the Invention

The invention relates to organic phosphonium salts, to a method for their preparation, and their use in electrochemical systems.

### Background of the Invention

Organic phosphonium salts have been used in electrochemical systems, particularly as electrolytes in batteries, and as electrolyte in capacitors. Such uses have been described by K. J. Fraser et al. in Aust. J. Chem. 2009, pp. 309 to 321. Triethyl-methoxyethyl phosphonium bis(trifluoromethylsulfonyl)imide (which designation of the anion, with the abbreviation "TFSI", is the colloquial term for the IUPAC name of "1,1,1-trifluoro-N-(trifluoromethyl)sulfonyl-methane sulfonamide") has been described as battery electrolyte by K. Tsunashima et al. in Chem. Lett. 2008, p. 314. Physical and electrochemical data for ionic liquids based on quaternary phosphonium cations containing an unsaturated carbon-carbon bond (triethyl (4-pentenyl)phosphonium and allyltributylphosphonium cations) have been disclosed by K. Tsunashima in Electrochimica Acta 56 (2011), pages 4351 to 4355.

Theoretical calculations of the width of the electrochemical window of room-temperature ionic liquids using four different computational models as published by Tian et al. in J. Phys. Chem. B 2012, vol. 116, pages 11943 to 11952, showed that this calculated width increases for the classes of imidazolium < ammonium < pyrrolidinium < phosphonium compounds, using the same anion in all cases which is 1,1,1-trifluoro-N-[(trifluoromethyl)sulfonyl]-methane sulfonamide (TFSI). While the experimental data show that the N,N-dimethylpyrrolidinium salt has the broadest electrochemical window, calculation attributes the broadest electrochemical window to the phosphonium salt, trimethyl-propyl phosphonium. No indication is given whether the calculation and experiments have been made for the n-propyl or for iso-propyl isomer. Therefore, neither of the propyl isomers has been unequivocally disclosed.

The application of phosphonium-based electrolytes with tetradecyl-trihexylphosphonium 1,1,1-trifluoro-N-(trifluoromethyl)sulfonyl-methane sulfonamide and tetradecyl-trihexylphosphonium cyanocyanamide as ionic liquids in super-capacitors has first been described by E. Frackowiak et al. in Appl. Phys. Lett. 86 (2005), page 164104 et seq.

In US patent application 2013/0095392 A1, ionic liquid compositions have been described which are based of phosphonium cations of formula R¹R²R³R⁴P having independently from two to fourteen carbon atoms. Among the anions mentioned for these phosphonium cations, there are nitrate NO₃⁻, trifluoromethanesulfonate CF₃SO₃⁻, 1,1,1-trifluoro-N-(trifluoromethylsulfonyl)methanesulfonamide also known as bis(trifluoromethylsulfonyl)imide (CF₃SO₂)₂N⁻, hexafluorophosphate PF₆⁻, toluenesulfonate CH₃C₆H₄SO₃⁻, methane-sulfonate CH₃SO₃⁻, iodide I⁻, tricyanomethanide (CN)₃C⁻, trifluoromethyltrifluoroborate CF₃BF₃⁻, heptafluoropropanesulfonate CF₃CF₂CF₂SO₃⁻, sulfate SO₄²⁻, trifluoroacetate CF₃COO⁻, heptafluorobutyrate CF₃CF₂CF₂COO⁻ and cyanocyanamide (CN)₂N⁻. While there are phosphonium cations mentioned that have methyl substituents, no combinations of these with individual anions are mentioned.

K. Tsunashima and coworkers have described the physical and electrochemical properties of phosphonium based ionic liquids derived from trimethyl phosphine in Electrochemistry Communications, vol. 39, 2014, pages 30 to 33. Trimethyl phosphine was reacted with bromoalkanes to prepare the quaternary phosphonium bromides. Data are given for trimethylpropyl phosphonium salts, trimethyl-methoxymethyl phosphonium salts, and trimethyl-allyl phosphonium salts, the anions being referred to as "bis(trifluoromethylsulfonyl)amide" (IUPAC name: 1,1,1-trifluoro-N-(trifluoro-methylsulfonyl)methane-sulfonamide) and "bis(fluorosulfonyl)amide" (also abbreviated as "FSI", IUPAC name: N-fluorosulfonyl-fluorosulfonamide). No indication is given whether the synthesis and the measurement has been made for the n-propyl or for iso-propyl isomer. Therefore, neither of the propyl isomers has been unequivocally disclosed.

The conductivity of ionic liquids and their viscosity are important properties governing application thereof as electrolytes. It was an object of the invention to provide ionic liquids with reduced viscosity and increased conductivity.

### Summary of the Invention

It has been found in the investigations underlying the present invention that phosphonium salts having at least two methyl substituents, and further substituents having from one to eight carbon atoms which are preferably selected from the group consisting of methyl, ethyl, n-propyl, iso-propyl, n-butyl, sec-butyl, iso-butyl and tert-butyl, and also isomers of pentyl, hexyl, heptyl, and octyl have very low viscosities and at the same time, high conductivity when in the liquid state. They also show a broad electrochemical window which makes them suitable for use in batteries, particularly in lithium-ion secondary batteries, and in electrochemical capacitors known as electric double-layer capacitors ("EDLC"), "pseudocapacitors", "super-capacitors" or "ultra-capacitors.

The invention therefore relates to phosphonium salts having at least two, and preferably, not more than three, methyl substituents, and further alkyl substituents having from one to eight carbon atoms which may be linear, branched or cyclic, or may form a ring including the phosphorus atom, and are preferably selected from the group consisting of methyl, ethyl, n-propyl, iso-propyl, n-butyl, sec-butyl, iso-butyl, tert-butyl, n-pentyl, 1,1-dimethyl-n-propyl, 1-methyl-n-butyl, 2-methyl-n-butyl, 1-ethyl-n-propyl, 2,2-dimethyl-n-propyl, 1,2-dimethyl-n-propyl, n-hexyl, 1-methyl-n-pentyl, 2-methyl-n-pentyl, 3-methyl-n-pentyl, 4-methyl-n-pentyl, 1,1-dimethyl-n-butyl, 2,2-dimethyl-n-butyl, 3,3-dimethyl-n-butyl, 1,2-dimethyl-n-butyl, 1,3-dimethyl-n-butyl, 2,3-dimethyl-n-butyl, 1-ethylbutyl, 2-ethylbutyl, 1-methyl-1-ethyl-n-propyl, 1-ethyl-2-methyl-n-propyl, 1,1,2-trimethyl-n-propyl, 1,2,2-trimethyl-n-propyl, n-heptyl, 1-methyl-n-hexyl, 2-methyl-n-hexyl, 3-methyl-n-hexyl, 4-methyl-n-hexyl, 5-methyl-n-hexyl, 1,1-dimethyl-n-pentyl, 2,2-dimethyl-n-pentyl, 3,3-dimethyl-n-pentyl, 4,4-dimethyl-n-pentyl, 1,2-dimethyl-n-pentyl, 1,3-dimethyl-n-pentyl, 1,4-dimethyl-n-pentyl, 2,3-dimethyl-n-pentyl, 2,4-dimethyl-n-pentyl, 3,4-dimethyl-n-pentyl, 1-ethylpentyl, 2-ethylpentyl, 3-ethylpentyl, 1-methyl-1-ethyl-n-butyl, 1-ethyl-2-methyl-n-butyl, 1-methyl-2-ethyl-n-butyl, 1-ethyl-3-methyl-n-butyl, 2-ethyl-3-methyl-n-butyl, 1,1,2-trimethyl-n-butyl, 1,1,3-trimethyl-n-butyl, 1,2,2-trimethyl-n-butyl, 1,2,3-trimethyl-n-butyl, 1,3,3-trimethyl-n-butyl, 2,2,3-trimethyl-n-butyl, 2,3,3-trimethyl-n-butyl, 1,1,2,2-tetramethyl-n-propyl, 1-ethyl-1,2-dimethyl-n-propyl, 1-ethyl-2,2-dimethyl-n-propyl, 2-ethyl-1,1-dimethyl-n-propyl, 2-ethyl-1,2-dimethyl-n-propyl, 1,1-diethyl-n-propyl, n-octyl, 1-methyl-n-heptyl, 2-methyl-n-heptyl, 3-methyl-n-heptyl, 4-methyl-n-heptyl, 5-methyl-n-heptyl, 6-methyl-n-heptyl, 1,1-dimethyl-n-hexyl, 2,2-dimethyl-n-hexyl, 3,3-dimethyl-n-hexyl, 4,4-dimethyl-n-hexyl, 5,5-dimethyl-n-hexyl, 1,2-dimethyl-n-hexyl, 1,3-dimethyl-n-hexyl, 1,4-dimethyl-n-hexyl, 1,5-dimethyl-n-hexyl, 2,3-dimethyl-n-hexyl, 2,4-dimethyl-n-hexyl, 2,5-dimethyl-n-hexyl, 3,4-dimethyl-n-hexyl, 3,5-dimethyl-n-hexyl, 4,5-dimethyl-n-hexyl, 1-ethylhexyl, 2-ethylhexyl, 3-ethylhexyl, 4-ethylhexyl, 1-methyl-1-ethyl-n-pentyl, 1-ethyl-2-methyl-n-pentyl, 1-methyl-2-ethyl-n-pentyl, 1-ethyl-3-methyl-n-pentyl, 1-methyl-3-ethyl-n-pentyl, 2-ethyl-3-methyl-n-pentyl, 2-ethyl-4-methyl-n-pentyl, 2-ethyl-2-methyl-n-pentyl, 3-ethyl-3-methyl-n-pentyl, 3-ethyl-4-methyl-n-pentyl, 1,1,2-trimethyl-n-pentyl, 1,1,3-trimethyl-n-pentyl, 1,1,4-trimethyl-n-pentyl, 1,2,2-trimethyl-n-pentyl, 1,2,3-trimethyl-n-pentyl, 1,2,4-trimethyl-n-pentyl, 1,3,3-trimethyl-n-pentyl, 1,3,4-trimethyl-n-pentyl, 1,4,4-trimethyl-n-pentyl, 2,2,3-trimethyl-n-pentyl, 2,2,4-trimethyl-n-pentyl, 2,3,3-trimethyl-n-pentyl, 2,3,4-trimethyl-n-pentyl, 2,4,4-trimethyl-n-pentyl, 3,3,4-trimethyl-n-pentyl, 3,4,4-trimethyl-n-pentyl, 1,1,2,2-tetramethyl-n-butyl, 1,1,2,3-tetramethyl-n-butyl, 1,1,2,4-tetramethyl-n-butyl, 1,2,2,3-tetramethyl-n-butyl, 1,2,3,3-tetramethyl-n-butyl, 2,2,3,3-tetramethyl-n-butyl, 1-ethyl-1,2-dimethyl-n-butyl, 1-ethyl-1,3-dimethyl-n-butyl, 1-ethyl-2,2-dimethyl-n-butyl, 1-ethyl-2,3-dimethyl-n-butyl, 1-ethyl-3,3-dimethyl-n-butyl, 2-ethyl-1,1-dimethyl-n-butyl, 2-ethyl-1,2-dimethyl-n-butyl, 2-ethyl-1,3-dimethyl-n-butyl, 2-ethyl-2,3-dimethyl-n-butyl, 2-ethyl-3,3-dimethyl-n-butyl, 1,1-diethyl-n-butyl, 1,2-diethyl-n-butyl, 2,2-diethyl-n-butyl, 1-ethyl-1,2,2-trimethyl-n-propyl, 1,1-diethyl-2-methyl-n-propyl, as well as cyclopentyl, cyclohexyl, cycloheptyl, cyclooctyl, 2-methylcyclopentyl, 3-methylcyclopentyl, 2-methylcyclohexyl, 3-methylcyclohexyl, 4-methylcyclohexyl, 2,2-dimethylcyclopentyl, 2,3-dimethylcyclopentyl, 3,3-dimethylcyclopentyl, 2,4-dimethylcyclopentyl, 2,5-dimethylcyclopentyl, 3,4-dimethylcyclopentyl, 2-ethylcyclopentyl, 3-ethylcyclopentyl, 2-ethyl-2-methylcyclopentyl, 2-ethyl-3-methylcyclopentyl, 2-ethyl-4-methylcyclopentyl, 2-ethyl-5-methylcyclopentyl, 3-ethyl-2-methylcyclopentyl, 3-ethyl-3-methylcyclopentyl, 3-ethyl-4-methylcyclopentyl, 2,2,3-trimethylcyclopentyl, 2,2,4-trimethylcyclopentyl, 2,2,5-trimethylcyclopentyl, 2,3,3-trimethylcyclopentyl, 2,3,4-trimethylcyclopentyl, 2,3,5-trimethylcyclopentyl, 2,4,4-trimethylcyclopentyl, 2-methyl-cyclohexyl, 3-methyl-cyclohexyl, 4-methyl-cyclohexyl, 2-ethyl-cyclohexyl, 3-ethyl-cyclohexyl, 4-ethyl-cyclohexyl, 2,2-dimethyl-cyclohexyl, 2,3-dimethyl-cyclohexyl, 2,4-dimethyl-cyclohexyl, 2,5-dimethyl-cyclohexyl, 2,6-dimethyl-cyclohexyl, 3,3-dimethyl-cyclohexyl, 3,4-dimethyl-cyclohexyl, 3,5-dimethyl-cyclohexyl, 4,4-dimethyl-cyclohexyl, to mixtures comprising these phosphonium salts, to a method of their preparation, and to applications of these phosphonium salts or their mixtures as constituents of ionic liquids for use particularly in batteries, electrochemical capacitors known as super-capacitors or ultra-capacitors, and other electrochemical devices.

The phosphonium salts have the formula I

R¹ R² R³ R⁴ P⁺ A⁻ (Formula I)

where the anions A- are preferably selected from the group consisting of N-fluorosulfonyl-fluorosulfonamide ,

F- SO₂ - N ⁻ - SO₂ - F, or (F - SO₂)₂ N⁻

and 1,1,1-trifluoro-N-(trifluoromethylsulfonyl)methanesulfonamide

F₃C - SO₂ - N⁻ - SO₂ - CF₃, or (F₃C - SO₂)₂ N⁻

as well as from tetrafluoroborate BF₄⁻, hexafluorophosphate PF₆-, hexafluoroarsenate AsF₆⁻, hexafluoroantimonate SbF₆⁻, perchlorate ClO₄⁻, trifluoromethanesulfonate CF₃SO₃⁻, toluenesulfonate CH₃C₆H₄SO₃⁻, methanesulfonate CH₃SO₃⁻, iodide I⁻, tricyanomethanide (CN)₃C⁻, trifluoromethyl trifluoroborate CF₃BF₃⁻, heptafluoropropanesulfonate CF₃CF₂CF₂SO₃⁻, sulfate SO₄²⁻, difluoromethane sulfonate CHF₂ - SO₃⁻, trifluoroacetate CF₃COO⁻, heptafluorobutyrate CF₃CF₂CF₂COO⁻, and cyanocyanamide ⁻N(CN)₂, dialkylphosphates, particularly dimethylphosphate (CH₃O)₂P(O)O⁻, and phosphonate anions which are preferably alkyl alkane phosphonates and alkyl arylphosphonates, particularly methyl methanephosphonate (CH₃)(CH₃O)P(O)O⁻ and methyl benzenephosphonate (C₆H₅)(CH₃O)P(O)O⁻. Mixtures of two or more of these anions can also be used. Such mixtures, notably mixtures of tetrafluoroborate BF₄⁻ anion and iodide I⁻ anion, provide higher capacitance values at less negative electrode potential when used as electrolyte components, compared to tetrafluoroborate alone. See Siinor et al, Electrochemistry Communications 35 (2013), pages 5 to 7.

A list of further anions which can advantageously be used is listed in the following Table:

| Name | Structure | Shorthand notation |
|---|---|---|
| bis(oxalato)borate | 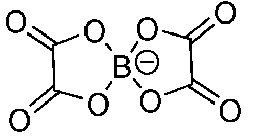 | (-OCOCOO-)₂B⁻ |
| difluoro(oxalato)borate, DFOB | | (-OCOCOO-)BF₂⁻ |
| tris(pentafluoroethyl) trifluorophosphate | | (CF₃CF₂)₃PF₃⁻ |
| bis(difluoromethylsulfonyl)amide | | (CHF₂SO₂)N⁻ |
| 4,5-dicyano-2-(trifluoromethyl)imidazolide | | TDI |
| trifluoro(trifluoromethyl)borate | | CF₃BF₃⁻ |

The substituents R¹ and R² are methyl groups. R³ is an alkyl group which is linear, branched or cyclic, preferably having from one to eight carbon atoms, particularly preferably selected from the group consisting of methyl, ethyl, n-propyl, iso-propyl, n-butyl, sec-butyl, iso-butyl, tert-butyl, n-pentyl, 1,1-dimethyl-n-propyl, 1-methyl-n-butyl, 2-methyl-n-butyl, 1-ethyl-n-propyl, 2,2-dimethyl-n-propyl, 1,2-dimethyl-n-propyl, n-hexyl, 1-methyl-n-pentyl, 2-methyl-n-pentyl, 3-methyl-n-pentyl, 4-methyl-n-pentyl, 1,1-dimethyl-n-butyl, 2,2-dimethyl-n-butyl, 3,3-dimethyl-n-butyl, 1,2-dimethyl-n-butyl, 1,3-dimethyl-n-butyl, 2,3-dimethyl-n-butyl, 1-ethylbutyl, 2-ethylbutyl, 1-methyl-1-ethyl-n-propyl, 1-ethyl-2-methyl-n-propyl, 1,1,2-trimethyl-n-propyl, 1,2,2-trimethyl-n-propyl, n-heptyl, 1-methyl-n-hexyl, 2-methyl-n-hexyl, 3-methyl-n-hexyl, 4-methyl-n-hexyl, 5-methyl-n-hexyl, 1,1-dimethyl-n-pentyl, 2,2-dimethyl-n-pentyl, 3,3-dimethyl-n-pentyl, 4,4-dimethyl-n-pentyl, 1,2-dimethyl-n-pentyl, 1,3-dimethyl-n-pentyl, 1,4-dimethyl-n-pentyl, 2,3-dimethyl-n-pentyl, 2,4-dimethyl-n-pentyl, 3,4-dimethyl-n-pentyl, 1-ethylpentyl, 2-ethylpentyl, 3-ethylpentyl, 1-methyl-1-ethyl-n-butyl, 1-ethyl-2-methyl-n-butyl, 1-methyl-2-ethyl-n-butyl, 1-ethyl-3-methyl-n-butyl, 2-ethyl-3-methyl-n-butyl, 1,1,2-trimethyl-n-butyl, 1,1,3-trimethyl-n-butyl, 1,2,2-trimethyl-n-butyl, 1,2,3-trimethyl-n-butyl, 1,3,3-trimethyl-n-butyl, 2,2,3-trimethyl-n-butyl, 2,3,3-trimethyl-n-butyl, 1,1,2,2-tetramethyl-n-propyl, 1-ethyl-1,2-dimethyl-n-propyl, 1-ethyl-2,2-dimethyl-n-propyl, 2-ethyl-1,1-dimethyl-n-propyl, 2-ethyl-1,2-dimethyl-n-propyl, 1,1-diethyl-n-propyl, n-octyl, 1-methyl-n-heptyl, 2-methyl-n-heptyl, 3-methyl-n-heptyl, 4-methyl-n-heptyl, 5-methyl-n-heptyl, 6-methyl-n-heptyl, 1,1-dimethyl-n-hexyl, 2,2-dimethyl-n-hexyl, 3,3-dimethyl-n-hexyl, 4,4-dimethyl-n-hexyl, 5,5-dimethyl-n-hexyl, 1,2-dimethyl-n-hexyl, 1,3-dimethyl-n-hexyl, 1,4-dimethyl-n-hexyl, 1,5-dimethyl-n-hexyl, 2,3-dimethyl-n-hexyl, 2,4-dimethyl-n-hexyl, 2,5-dimethyl-n-hexyl, 3,4-dimethyl-n-hexyl, 3,5-dimethyl-n-hexyl, 4,5-dimethyl-n-hexyl, 1-ethylhexyl, 2-ethylhexyl, 3-ethylhexyl, 4-ethylhexyl, 1-methyl-1-ethyl-n-pentyl, 1-ethyl-2-methyl-n-pentyl, 1-methyl-2-ethyl-n-pentyl, 1-ethyl-3-methyl-n-pentyl, 1-methyl-3-ethyl-n-pentyl, 2-ethyl-3-methyl-n-pentyl, 2-ethyl-4-methyl-n-pentyl, 2-ethyl-2-methyl-n-pentyl, 3-ethyl-3-methyl-n-pentyl, 3-ethyl-4-methyl-n-pentyl, 1,1,2-trimethyl-n-pentyl, 1,1,3-trimethyl-n-pentyl, 1,1,4-trimethyl-n-pentyl, 1,2,2-trimethyl-n-pentyl, 1,2,3-trimethyl-n-pentyl, 1,2,4-trimethyl-n-pentyl, 1,3,3-trimethyl-n-pentyl, 1,3,4-trimethyl-n-pentyl, 1,4,4-trimethyl-n-pentyl, 2,2,3-trimethyl-n-pentyl, 2,2,4-trimethyl-n-pentyl, 2,3,3-trimethyl-n-pentyl, 2,3,4-trimethyl-n-pentyl, 2,4,4-trimethyl-n-pentyl, 3,3,4-trimethyl-n-pentyl, 3,4,4-trimethyl-n-pentyl, 1,1,2,2-tetramethyl-n-butyl, 1,1,2,3-tetramethyl-n-butyl, 1,1,2,4-tetramethyl-n-butyl, 1,2,2,3-tetramethyl-n-butyl, 1,2,3,3-tetramethyl-n-butyl, 2,2,3,3-tetramethyl-n-butyl, 1-ethyl-1,2-dimethyl-n-butyl, 1-ethyl-1,3-dimethyl-n-butyl, 1-ethyl-2,2-dimethyl-n-butyl, 1-ethyl-2,3-dimethyl-n-butyl, 1-ethyl-3,3-dimethyl-n-butyl, 2-ethyl-1,1-dimethyl-n-butyl, 2-ethyl-1,2-dimethyl-n-butyl, 2-ethyl-1,3-dimethyl-n-butyl, 2-ethyl-2,3-dimethyl-n-butyl, 2-ethyl-3,3-dimethyl-n-butyl, 1,1-diethyl-n-butyl, 1,2-diethyl-n-butyl, 2,2-diethyl-n-butyl, 1-ethyl-1,2,2-trimethyl-n-propyl, 1,1-diethyl-2-methyl-n-propyl, as well as cyclopentyl, cyclohexyl, cycloheptyl, cyclooctyl, 2-methylcyclopentyl, 3-methylcyclopentyl, 2-methyl-cyclohexyl, 3-methylcyclohexyl, 4-methylcyclohexyl, 2,2-dimethylcyclopentyl, 2,3-dimethylcyclopentyl, 3,3-dimethylcyclopentyl, 2,4-dimethylcyclopentyl, 2,5-dimethylcyclopentyl, 3,4-dimethylcyclopentyl, 2-ethylcyclopentyl, 3-ethylcyclopentyl, 2-ethyl-2-methylcyclopentyl, 2-ethyl-3-methylcyclopentyl, 2-ethyl-4-methylcyclopentyl, 2-ethyl-5-methylcyclopentyl, 3-ethyl-2-methylcyclopentyl, 3-ethyl-3-methylcyclopentyl, 3-ethyl-4-methylcyclopentyl, 2,2,3-trimethylcyclopentyl, 2,2,4-trimethylcyclopentyl, 2,2,5-trimethylcyclopentyl, 2,3,3-trimethylcyclopentyl, 2,3,4-trimethylcyclopentyl, 2,3,5-trimethylcyclopentyl, 2,4,4-trimethylcyclopentyl, 2-methyl-cyclohexyl, 3-methyl-cyclohexyl, 4-methyl-cyclohexyl, 2-ethyl-cyclohexyl, 3-ethyl-cyclohexyl, 4-ethyl-cyclohexyl, 2,2-dimethyl-cyclohexyl, 2,3-dimethyl-cyclohexyl, 2,4-dimethyl-cyclohexyl, 2,5-dimethyl-cyclohexyl, 2,6-dimethyl-cyclohexyl, 3,3-dimethyl-cyclohexyl, 3,4-dimethyl-cyclohexyl, 3,5-dimethyl-cyclohexyl, 4,4-dimethyl-cyclohexyl, and R⁴ is an alkyl group which is linear, branched or cyclic, preferably having from one to eight carbon atoms, more preferred from two to eight carbon atoms, the alkyl groups being selected from the group consisting of methyl, ethyl, n-propyl, iso-propyl, n-butyl, sec-butyl, iso-butyl, tert-butyl, n-pentyl, 1,1-dimethyl-n-propyl, 1-methyl-n-butyl, 2-methyl-n-butyl, 1-ethyl-n-propyl, 2,2-dimethyl-n-propyl, 1,2-dimethyl-n-propyl, n-hexyl, 1-methyl-n-pentyl, 2-methyl-n-pentyl, 3-methyl-n-pentyl, 4-methyl-n-pentyl, 1,1-dimethyl-n-butyl, 2,2-dimethyl-n-butyl, 3,3-dimethyl-n-butyl, 1,2-dimethyl-n-butyl, 1,3-dimethyl-n-butyl, 2,3-dimethyl-n-butyl, 1-ethylbutyl, 2-ethylbutyl, 1-methyl-1-ethyl-n-propyl, 1-ethyl-2-methyl-n-propyl, 1,1,2-trimethyl-n-propyl, 1,2,2-trimethyl-n-propyl, n-heptyl, 1-methyl-n-hexyl, 2-methyl-n-hexyl, 3-methyl-n-hexyl, 4-methyl-n-hexyl, 5-methyl-n-hexyl, 1,1-dimethyl-n-pentyl, 2,2-dimethyl-n-pentyl, 3,3-dimethyl-n-pentyl, 4,4-dimethyl-n-pentyl, 1,2-dimethyl-n-pentyl, 1,3-dimethyl-n-pentyl, 1,4-dimethyl-n-pentyl, 2,3-dimethyl-n-pentyl, 2,4-dimethyl-n-pentyl, 3,4-dimethyl-n-pentyl, 1-ethylpentyl, 2-ethylpentyl, 3-ethylpentyl, 1-methyl-1-ethyl-n-butyl, 1-ethyl-2-methyl-n-butyl, 1-methyl-2-ethyl-n-butyl, 1-ethyl-3-methyl-n-butyl, 2-ethyl-3-methyl-n-butyl, 1,1,2-trimethyl-n-butyl, 1,1,3-trimethyl-n-butyl, 1,2,2-trimethyl-n-butyl, 1,2,3-trimethyl-n-butyl, 1,3,3-trimethyl-n-butyl, 2,2,3-trimethyl-n-butyl, 2,3,3-trimethyl-n-butyl, 1,1,2,2-tetramethyl-n-propyl, 1-ethyl-1,2-dimethyl-n-propyl, 1-ethyl-2,2-dimethyl-n-propyl, 2-ethyl-1,1-dimethyl-n-propyl, 2-ethyl-1,2-dimethyl-n-propyl, 1,1-diethyl-n-propyl, n-octyl, 1-methyl-n-heptyl, 2-methyl-n-heptyl, 3-methyl-n-heptyl, 4-methyl-n-heptyl, 5-methyl-n-heptyl, 6-methyl-n-heptyl, 1,1-dimethyl-n-hexyl, 2,2-dimethyl-n-hexyl, 3,3-dimethyl-n-hexyl, 4,4-dimethyl-n-hexyl, 5,5-dimethyl-n-hexyl, 1,2-dimethyl-n-hexyl, 1,3-dimethyl-n-hexyl, 1,4-dimethyl-n-hexyl, 1,5-dimethyl-n-hexyl, 2,3-dimethyl-n-hexyl, 2,4-dimethyl-n-hexyl, 2,5-dimethyl-n-hexyl, 3,4-dimethyl-n-hexyl, 3,5-dimethyl-n-hexyl, 4,5-dimethyl-n-hexyl, 1-ethylhexyl, 2-ethylhexyl, 3-ethylhexyl, 4-ethylhexyl, 1-methyl-1-ethyl-n-pentyl, 1-ethyl-2-methyl-n-pentyl, 1-methyl-2-ethyl-n-pentyl, 1-ethyl-3-methyl-n-pentyl, 1-methyl-3-ethyl-n-pentyl, 2-ethyl-3-methyl-n-pentyl, 2-ethyl-4-methyl-n-pentyl, 2-ethyl-2-methyl-n-pentyl, 3-ethyl-3-methyl-n-pentyl, 3-ethyl-4-methyl-n-pentyl, 1,1,2-trimethyl-n-pentyl, 1,1,3-trimethyl-n-pentyl, 1,1,4-trimethyl-n-pentyl, 1,2,2-trimethyl-n-pentyl, 1,2,3-trimethyl-n-pentyl, 1,2,4-trimethyl-n-pentyl, 1,3,3-trimethyl-n-pentyl, 1,3,4-trimethyl-n-pentyl, 1,4,4-trimethyl-n-pentyl, 2,2,3-trimethyl-n-pentyl, 2,2,4-trimethyl-n-pentyl, 2,3,3-trimethyl-n-pentyl, 2,3,4-trimethyl-n-pentyl, 2,4,4-trimethyl-n-pentyl, 3,3,4-trimethyl-n-pentyl, 3,4,4-trimethyl-n-pentyl, 1,1,2,2-tetramethyl-n-butyl, 1,1,2,3-tetramethyl-n-butyl, 1,1,2,4-tetramethyl-n-butyl, 1,2,2,3-tetramethyl-n-butyl, 1,2,3,3-tetramethyl-n-butyl, 2,2,3,3-tetramethyl-n-butyl, 1-ethyl-1,2-dimethyl-n-butyl, 1-ethyl-1,3-dimethyl-n-butyl, 1-ethyl-2,2-dimethyl-n-butyl, 1-ethyl-2,3-dimethyl-n-butyl, 1-ethyl-3,3-dimethyl-n-butyl, 2-ethyl-1,1-dimethyl-n-butyl, 2-ethyl-1,2-dimethyl-n-butyl, 2-ethyl-1,3-dimethyl-n-butyl, 2-ethyl-2,3-dimethyl-n-butyl, 2-ethyl-3,3-dimethyl-n-butyl, 1,1-diethyl-n-butyl, 1,2-diethyl-n-butyl, 2,2-diethyl-n-butyl, 1-ethyl-1,2,2-trimethyl-n-propyl, 1,1-diethyl-2-methyl-n-propyl, as well as cyclopentyl, cyclohexyl, cycloheptyl, cyclooctyl, 2-methylcyclopentyl, 3-methylcyclopentyl, 2-methylcyclohexyl, 3-methylcyclohexyl, 4-methylcyclohexyl, 2,2-dimethylcyclopentyl, 2,3-dimethylcyclopentyl, 3,3-dimethylcyclopentyl, 2,4-dimethylcyclopentyl, 2,5-dimethylcyclopentyl, 3,4-dimethylcyclopentyl, 2-ethylcyclopentyl, 3-ethylcyclopentyl, 2-ethyl-2-methylcyclopentyl, 2-ethyl-3-methylcyclopentyl, 2-ethyl-4-methylcyclopentyl, 2-ethyl-5-methylcyclopentyl, 3-ethyl-2-methylcyclopentyl, 3-ethyl-3-methylcyclopentyl, 3-ethyl-4-methylcyclopentyl, 2,2,3-trimethylcyclopentyl, 2,2,4-trimethylcyclopentyl, 2,2,5-trimethylcyclopentyl, 2,3,3-trimethylcyclopentyl, 2,3,4-trimethylcyclopentyl, 2,3,5-trimethylcyclopentyl, 2,4,4-trimethylcyclopentyl, 2-methyl-cyclohexyl, 3-methyl-cyclohexyl, 4-methyl-cyclohexyl, 2-ethyl-cyclohexyl, 3-ethyl-cyclohexyl, 4-ethyl-cyclohexyl, 2,2-dimethyl-cyclohexyl, 2,3-dimethyl-cyclohexyl, 2,4-dimethyl-cyclohexyl, 2,5-dimethyl-cyclohexyl, 2,6-dimethyl-cyclohexyl, 3,3-dimethyl-cyclohexyl, 3,4-di-methyl-cyclohexyl, 3,5-dimethyl-cyclohexyl, 4,4-dimethyl-cyclohexyl. With particular preference, R³ and R⁴ are different in formula I. It is further possible, in a preferred embodiment, that R³ and R⁴ form a cyclic structure together with the phosphorus atom, wherein the cyclic structure is with preference a five-membered ring, a six-membered ring, a seven-membered ring, or an eight-membered ring, and the phosphorus atom being a member of the ring. Such compounds are with preference P,P-dimethyl-phosphacyclopentane, P,P-dimethyl-phosphacyclohexane, P,P-dimethyl-phosphacycloheptane, P,P-dimethyl-phosphacyclooctane and compounds derived from these which additionally bear alkyl substituents on the ring, such as 3,P,P-trimethyl-phosphacyclopentane, 4,P,P-trimethyl-phosphacyclohexane, 3-nonyl-P,P-dimethyl-phosphacyclopentane, and 4-nonyl-P,P-dimethyl-phosphacyclohexane. In a further preferred embodiment, at least one, preferably, both, of R³ and R⁴ have a maximum of six carbon atoms. In a still further preferred embodiment, at least one of R³ and R⁴ has at least one carbon atom that is directly bound to more than two other carbon atoms, i. e. a tertiary or quaternary carbon atom.

The anion is created either by an alkylation reaction of an organic phosphine with trialkylphosphate, as described in US 7,829,744 B2, or can be introduced in a metathesis reaction of a dialkyl phosphate as described supra by reacting with a salt of the desired anion.

### Detailed Description of the Preferred Embodiments

Preferred phosphonium salts are those having the following cations:
trimethyl ethyl phosphonium,
trimethyl n-propyl phosphonium,
trimethyl iso-propyl phosphonium,
trimethyl n-butyl phosphonium,
trimethyl iso-butyl phosphonium,
trimethyl sec-butyl phosphonium,
trimethyl tert-butyl phosphonium,
dimethyl diethyl phosphonium,
dimethyl ethyl n-propyl phosphonium,
dimethyl ethyl iso-propyl phosphonium,
dimethyl ethyl n-butyl phosphonium,
dimethyl ethyl iso-butyl phosphonium,
dimethyl ethyl sec-butyl phosphonium,
dimethyl ethyl tert-butyl phosphonium,
dimethyl di-(n-propyl) phosphonium,
dimethyl n-propyl iso-propyl phosphonium,
dimethyl n-propyl n-butyl phosphonium,
dimethyl n-propyl iso-butyl phosphonium,
dimethyl n-propyl sec-butyl phosphonium,
dimethyl n-propyl tert-butyl phosphonium,
dimethyl di(iso-propyl) phosphonium,
dimethyl iso-propyl n-butyl phosphonium,
dimethyl iso-propyl iso-butyl phosphonium,
dimethyl iso-propyl sec-butyl phosphonium,
dimethyl iso-propyl tert-butyl phosphonium,
dimethyl di-(n-butyl) phosphonium,
dimethyl n-butyl iso-butyl phosphonium,
dimethyl n-butyl sec-butyl phosphonium,
dimethyl n-butyl tert-butyl phosphonium,
dimethyl di-(iso-butyl) phosphonium,
dimethyl iso-butyl sec-butyl phosphonium,
dimethyl iso-butyl tert-butyl phosphonium,
dimethyl di-(sec-butyl) phosphonium,
dimethyl sec-butyl tert-butyl phosphonium
dimethyl di-(tert-butyl) phosphonium.

Among these, phosphonium salts having the following phosphonium cations are preferred:
trimethyl n-propyl phosphonium,
trimethyl iso-propyl phosphonium,
trimethyl n-butyl phosphonium,
trimethyl iso-butyl phosphonium,
trimethyl sec-butyl phosphonium,
trimethyl tert-butyl phosphonium,
dimethyl ethyl n-propyl phosphonium,
dimethyl ethyl iso-propyl phosphonium,
dimethyl ethyl n-butyl phosphonium,
dimethyl ethyl sec-butyl phosphonium,
dimethyl ethyl tert-butyl phosphonium,
dimethyl ethyl iso-butyl phosphonium.

It is further preferred to use the following anions for the phosphonium salts mentioned supra:
N-fluorosulfonyl-fluorosulfonamide F- SO₂ - N ⁻ - SO₂ - F,
1,1,1-trifluoro-N-(trifluoromethylsulfonyl)methanesulfonamide F₃C - SO₂ - N⁻ - SO₂ - CF₃,
tetrafluoroborate BF₄⁻,
hexafluorophosphate PF₆-,
hexafluoroarsenate AsF₆⁻,
perchlorate ClO,⁻
trifluoromethanesulfonate CF₃SO₃⁻,
toluenesulfonate CH₃C₆H₄SO₃⁻,
methanesulfonate CH₃SO₃⁻,
iodide I⁻,
tricyanomethanide (CN)₃C⁻,
trifluoromethyl trifluoroborate CF₃BF₃⁻,
heptafluoropropanesulfonate CF₃CF₂CF₂SO₃⁻
sulfate SO₄²⁻,
trifluoroacetate CF₃COO⁻,
heptafluorobutyrate CF₃CF₂CF₂COO⁻,
cyanocyanamide ⁻N(CN)₂
dialkylphosphates, particularly dimethylphosphate (CH₃O)₂P(O)O⁻,
and phosphonate anions which are preferably alkyl alkane phosphonates and alkyl arylphosphonates, particularly methyl methanephosphonate (CH₃)(CH₃O)P(O)O⁻ and methyl benzenephosphonate (C₆H₅)(CH₃O)P(O)O⁻.

Among these, tetrafluoroborate BF₄⁻, hexafluorophosphate PF₆⁻, tricyanomethanide (CN)₃C⁻, trifluoromethyltrifluoroborate CF₃BF₃⁻, cyanocyanamide ⁻N(CN)₂, dialkylphosphates, phosphonates, 1,1,1-trifluoro-N-(trifluoromethylsulfonyl)methanesulfonamide (CF₃-SO₂)₂N⁻, and N-fluorosulfonyl-fluorosulfonamide (F-SO₂)₂N⁻, are especially preferred.

Among the tetrafluoroborates of the phosphonium salts mentioned supra, the following are particularly preferred:
phosphonium tetrafluoroborates where the cation is selected from the group consisting of tetramethyl phosphonium, trimethyl n-butyl phosphonium, trimethyl iso-butyl phosphonium, trimethyl sec-butyl phosphonium, trimethyl tert-butyl phosphonium, dimethyl ethyl n-butyl phosphonium, dimethyl ethyl sec-butyl phosphonium, dimethyl ethyl tert-butyl phosphonium, and dimethyl ethyl iso-butyl phosphonium.

In a preferred embodiment, R³ is different from R⁴.

In a preferred embodiment, an ionic liquid composition comprises at least two of the phosphonium salts of formula I, where the individual phosphonium salts differ from one another by at least one of the substituents R³ and R⁴, or the anion A⁻.

In a preferred embodiment, a mixture of two or more different anions is used with the same cation. Binary mixtures where two different anions are used with the same cation preferably comprise mass fractions of from 1 % to 99 % of the first anion, and from 99 % to 1 % of the second anion, and preferably, from 30 % to 70 % of the first anion, and from 70 % to 30 % of the second anion.

It is also preferred to use mixtures of two or more phosphonium salts having the same anion or different anions, where the cations differ in at least one of R³ and R⁴.

Any combination of two or more of these preferred embodiments is particularly preferred.

Particularly preferred are mixtures comprising as cations
trimethyl n-propyl phosphonium and trimethyl iso-propyl phosphonium, trimethyl n-propyl phosphonium and trimethyl n-butyl phosphonium, trimethyl n-propyl phosphonium and trimethyl iso-butyl phosphonium, trimethyl iso-propyl phosphonium and trimethyl n-butyl phosphonium, trimethyl iso-propyl phosphonium and trimethyl iso-butyl phosphonium, either with the same anion or with a mixture of two or more anions, which are preferably selected from the preferred anions; particularly preferably, tetrafluoroborate is used as anion.

These mixtures can comprise mass fractions of from 1 % to 99 % of the first ingredient, and from 99 % to 1 % of the second ingredient, and preferably, from 30 % to 70 % of the first ingredient, and from 70 % to 30 % of the second ingredient, independently of each other both for the cations and for the anions.

The phosphonium salts of this invention are preferably made using the process described in US patent 7,829,744 B2, wherein monoalkyl or dialkyl phosphanes were alkylated (preferably methylated or ethylated) under a nitrogen blanket using trialkyl phosphate in stoichiometric excess.

Ionic liquids based on these phosphonium salts comprise at least one of the phosphonium salts of formula I where the combination of cation and anion is chosen in a way that the resulting salt is a liquid at an arbitrary temperature, in most practical definitions, at a temperature of below 100 °C.

Liquid compositions comprising ionic liquids comprising the phosphonium salts of formula I, or mixtures of phosphonium salts of formula I, according to this invention and further constituents selected from the group consisting of solvents, further salts that are soluble in the ionic liquid, or in the ionic liquid and solvent mixture, and additives such as flame retardants, and viscosity modifiers, can be used as electrolytes in electrochemical cells, particularly in lithium-ion batteries, and in the so-called supercapacitors which constitute a class of electrochemical capacitors, including double-layer capacitors which have mostly carbon or carbon-composite electrodes, and where the capacitance of the static double layer formed in the vicinity of the electrode is decisive, the so-called pseudocapacitors having mostly electrodes made from metal oxides, or from electrically conducting polymers, where the high value of faradaic pseudocapacitance is decisive, and the so-called hybrid capacitors having asymmetric electrodes, and that display both faradaic pseudocapacitance, and double-layer capacitance.

A substance (solute) is regarded as "soluble" in another substance (solvent) in connection with the present application if a homogeneous liquid mixed phase (solution) exists at a given temperature (in this case, between 0 °C and 100 °C) where the mass fraction w(B) of the solute in the solution, calculated as the ratio of the mass m(B) of solute and the mass m(S) of the solution in a portion of the solution, is at least 0.1 % (1 g/kg).

In an embodiment of this invention, electrolytes are provided which comprise ionic liquids based on the phosphonium salts of formula I, or mixtures of phosphonium salts of formula I, according to this invention, and further comprise dissolved salts which are not ionic liquids themselves, such as alkali salts, which are preferably potassium, sodium and lithium salts, and quaternary organic ammonium salts which comprise tetraalkylammonium salts, imidazolium salts, pyrazolium salts, pyridinium salts, pyrazinium salts, pyrimidinium salts, pyridazinium salts, and pyrrolidinium salts, with anions as listed supra, preferably selected from the group consisting of dialkylphosphates, alkyl alkane phosphonates, alkyl arylphosphonates, perchlorate, tetrafluoroborate, trifluoromethane-sulfonate, hexafluorophosphate, hexafluoroarsenate, hexafluoro-antimonate, trifluoromethanesulfonate, toluenesulfonate, methane-sulfonate, iodide, tricyanomethanide, trifluoromethyltrifluoroborate, heptafluoropropanesulfonate, sulfate, trifluoroacetate, heptafluorobutyrate, cyanocyanamide, N-fluorosulfonyl-fluorosulfonamide, 1,1,1-trifluoro-N-(trifluoromethylsulfonyl)-methanesulfonamide, preferably lithium salts. Particularly preferred are lithium salts having fluorine-containing complex anions, viz., tetrafluoroborate, hexafluorophosphate, hexafluoroarsenate, hexafluoroantimonate, and especially preferred, LiPF₆. The concentration of these additional salts in the electrolyte is preferably from 0.05 mol/L to 3 mol/L, particularly preferred, from 0.2 mol/L to 2.5 mol/L.

These electrolytes according to the invention may also comprise solvents, particularly the known solvents which are organic carbonates R⁵-O-CO-O-R⁶, where R⁵ and R⁶ are independently selected from the group consisting of alkyl groups having from one to ten carbon atoms, with the sum of the number of carbon atoms in R⁵ and R⁶ being preferably at least two, preferably dimethyl carbonate, diethyl carbonate, methylethyl carbonate, and mixtures of these, and cyclic alkylene carbonates having from two to ten carbon atoms in the alkylene group, such as ethylene carbonate, propylene carbonate, butylene carbonate, and mixtures of these.

It is also possible to use fluorinated ethers and esters, such as those disclosed by Tikhonov et al. in US 2013/0337 338 A1. The electrolyte preferably additionally comprises a mass fraction of from 0.1 % to 20 % of a fluorinated compound selected from the group consisting of fluorinated cyclic alkylene carbonates having from two to ten carbon atoms in the fluorinated alkylene group, and from fluorinated dialkyl carbonates R⁷-O-CO-O-R⁸, where R⁷ and R⁸ are independently selected from the group consisting of non-fluorinated and fluorinated alkyl groups having from one to ten carbon atoms, at least one of R⁷ and R⁸ being fluorinated, with the sum of the number of carbon atoms in R⁷ and R⁸ preferably being at least three.

The mass fraction of solvents in the electrolyte is preferably from 1 % to 50 %. In the use as electrolytes for electrochemical capacitors, concentration of ionic liquids dissolved in organic solvents is usually between 1 mol/L and 6 mol/L.

In a further embodiment, the electrolyte composition also contains a flame retardant. Flame retardants are mostly based on halogenated organic compounds, such as the fluorinated ethers and esters mentioned supra, and preferably, phosphorus compounds such as phosphazenes, phosphines, phosphates and phosphites, especially preferred, organic esters of phosphorus-derived acids such as dimethyl methanephosphonate, or triethyl phosphate. The preferred mass fraction of flame retardant in the electrolyte is from 2 % to 30 %. It has been found in the course of the experiments that have led to the present invention that the presence of ionic liquids based on the phosphonium salts of formula I, or mixtures of phosphonium salts of formula I, according to this invention, impart inherently lowered flammability to electrolytes comprising these, thus reducing the amount of flame retardants needed, or even completely replacing these. Of course, the ionic liquids based on the phosphonium salts of formula I, or mixtures of phosphonium salts of formula I, according to this invention, not only lower the flammability, but they also increase the conductivity of the electrolyte, in contrast to the added flame retardants, and thereby lower the voltage drop through the battery during flow of electrical current, or provide more ions in the electrolyte and thereby enhance the pseudocapacitance in electrochemical capacitors.

In a further preferred embodiment, electrolytes comprising ionic liquids based on the phosphonium salts of formula I, or mixtures of phosphonium salts of formula I, according to this invention that are used in conjunction with carbon or graphite anodes preferably include materials known as "solid electrolyte interphase" (SEI) formers. The presence of such protective layer is important for the operation of Li-ion batteries based on carbon or carbon composite anodes as it reduces electrolytic decomposition of other electrolyte constituents. This layer is formed during the first charge process, by chemical reactions of SEI formers on the electrode. The amount of these additives is chosen in a way that it is consumed as completely as possible during the first charge process. These additives are chosen to have a higher reduction potential than the other components of the electrolyte and are therefore consumed during the initial charge process by formation of an insoluble solid surface layer from their reductive decomposition process. An example of SEI former is vinylene carbonate which polymerises on the surface of the carbon electrode to form a polymeric layer. Other polymerisable compounds have also been used, such as vinyl ethylene carbonate, 4,5-dimethyl-[1,3]dioxol-2-one, vinyl ethylene sulfite, vinyl acetate, vinylpyridine, acrylonitrile, 2-cyanofuran, and some maleimide-based aromatic compounds such as the reaction products of maleic anhydride and bis-(4-aminophenyl)methane, para-phenylenediamine, and meta-phenylenediamine. Other SEI formers include fluoroethylene carbonate, ethylene sulfite, propylene sulfite, 1,3-propane sultone, 1,4-butane sultone, succinic anhydride, and 2,2-dimethoxypropane. The mass fraction of these SEI formers in the electrolyte for lithium ion batteries according to the invention is preferably from 0.1 % to 5 %.

Mass fractions w(i) of a substance i in a mixture, as recited herein, are always the ratio of the mass m(i) of the substance i under consideration, and the mass m(M) of the mixture M under consideration. They may be used with the SI unit kg/kg, or any multiple thereof, such as g/kg, mg/kg, or kg / (100 kg) = %.

The electrolytes which comprise ionic liquids based on the phosphonium salts of formula I, and/or mixtures of two or more of these phosphonium salts, can preferably be used in devices for storage of electric energy, such as lithium ion batteries, and in electrochemical capacitors known as electric double-layer capacitors ("EDLC"), "pseudocapacitors", "super-capacitors" or "ultra-capacitors.

Carbon or materials that comprise at least a mass fraction of 25 % of carbon in the form of powdery carbon such as milled charcoal, or compressed carbon powders, carbon felt, carbon fibres, graphenes, carbon aerogel, carbon cloth, carbon nanotubes, graphite, and expanded graphite, or any mixtures of these are particularly useful for electrodes used in electric double layer capacitors.

For pseudocapacitors where charge storage is based on faradaic charge transfer, conductive polymers or certain transition metal oxides are the material of choice for electrodes.

In the so-called hybrid capacitors, asymmetric electrode pairs are used, and charge storage is based on both double layers and faradaic charge transfer, in approximately equal shares.

The phosphonium salts and ionic liquids of the present invention, can be used in all types of the electrochemical capacitors mentioned. They provide high conductivity, good chemical stability, and a good wetting of the electrodes due to their low viscosity.

### Examples

### Example 1 Synthesis of trimethyl-alkyl phosphonium salts

Using the process described in US patent 7,829,744 B2, monoalkyl phosphanes were methylated under a nitrogen blanket using trimethyl phosphate in stoichiometric excess (>3 mol of trimethyl phosphate for 1 mol of monoalkyl phosphane) at a temperature of from 120 °C to 210 °C, depending on the substrate and scale of the reaction. After completion of the reaction, the volatiles (mostly excess trimethyl phosphate) were distilled off under reduced pressure of no more than 2666 Pa (20 Torr), at a temperature of from 100 °C to 180 °C. Colourless liquids or solids were obtained. The identity of the desired reaction product, a mixture of trimethyl alkyl phosphonium dimethyl phosphate and the dimethyl ester of phosphoric acid, was verified by recording ¹H-, ¹³C- and ³¹P-NMR spectra of the reaction products, and comparison of these with the standard spectra taken on purified substances of known composition.

The organic phosphonium salts with dimethylphosphate as anion thus prepared were converted to their N-fluorosulfonyl-fluorosulfon-amides, abbreviated hereinafter as "FSI" and their 1,1,1-trifluoro-N-(trifluoromethylsulfonyl)methanesulfonamides, abbreviated hereinafter as "FSI", by reaction with the free acids or the corresponding alkali or ammonium or organoammonium salts, preferably potassium, sodium or lithium salts, such as Li-N(-SO₂-F)₂ or "Li-FSI salt", and Li-N(-SO₂-CF₃)₂ or "Li-TFSI salt", with separation of the lithium dimethylphosphate salt formed in this metathesis reaction with aqueous wash steps, and repetition of the treatment with fresh Li-TFSI salt or Li-FSI salt followed by several water washes. After several of these cycles, removal of the volatiles in vacuum and final drying, the purity of the phosphonium FSI salt and phosphonium TFSI salt was satisfactory, and the mass fraction of the remaining trimethyl phosphate in the isolated salts was less than 0.5 %.

Particularly, iso-butyltrimethylphosphonium dimethylphosphate, [P(i-Bu)Me₃] [O=P(O) (OMe)₂] was prepared as the first step by the following method:
To a 500 mL three-neck, round-bottom flask equipped with a stir bar, condenser, a dropping funnel, and a thermowell were added 284 g of trimethylphosphate under an inert atmosphere. The dropping funnel was charged with 45 g of iso-butylphosphane. The reaction flask was heated to 130 °C and stirring commenced. Iso-butylphosphane was added dropwise at a rate slow enough to maintain a gentle reflux. During the course of addition of the iso-butylphosphane the oil bath temperature was raised gradually to a final temperature of 150 °C, all the while maintaining a mild reflux. Upon completion of addition of the iso-butylphosphane the reaction mixture was heated for an additional 2.5 hours at 150 °C.

The crude reaction product was purified by distillation under reduced pressure to collect the excess trimethylphosphate. The distillation was run for two hours under pot temperatures from 82 °C to 117 °C, and a pressure of 2.13 kPa to 0.67 kPa (16 Torr to 5 Torr). During this time span the condensate temperature hovered between 70 °C and 74 °C. The distillation was stopped once reflux ceased and no additional condensate was noted, indicating the bulk of the volatiles had been removed.

In this manner 244 g (corresponding to a yield of 95 % of the theoretical product mass) of a viscous, water-white product was obtained having a purity corresponding to a mass fraction of 91 % of the desired product, based on ³¹P-NMR, where the major impurity was the dimethyl ester of phosphoric acid. Spectra were taken for ³¹P {¹H}-NMR (dissolved in CDCl₃, 600 MHz); chemical shift δ in ppm was at 0.23 (s), 0.11 (s), 2.24 (s), and 25.40 (s). For ¹H-NMR (CDCl₃, 600 MHz) chemical shift δ in ppm was at 1.068 (d, 6H, 2J = 6.6 Hz), 1.972 (d, 9H, 2J = 14.4 Hz), 2.031 (m, 1H), 2.214 (dd, 2H), 3.619 (d, 18H, 2J = 11.4 Hz), 3.735 (d, P(O)(OMe)₃ impurity), 14.213 (s, 2H).

The iso-butyltrimethylphosphonium 1,1,1-trifluoro-N-(trifluoromethylsulfonyl)methanesulfonamide, P(i-Bu)Me₃] [CF₃SO₂NSO₂CF₃] (compound A in Table 1 below) was obtained therefrom as follows: Iso-butyltrimethylphosphonium dimethylphosphate from the preceding reaction was weighed into a 1 L beaker. The lithium salt of 1,1,1-trifluoro-N-(trifluoromethylsulfonyl)methanesulfonamide which is also referred to as "Lithium TFSI" (solution in water having a mass fraction of salt of 80 %) was weighed into a 125 mL beaker and was added with stirring in two portions. The mixture was stirred for twenty minutes, after which time water (85 g) was added to solubilize the solids, and methylene chloride (252 g) was also admixed to facilitate phase separation. The resultant mixture was stirred for an additional forty minutes, after which time it was transferred in a separatory funnel. The lower phase containing the desired product (387 g) was removed and set aside. The upper aqueous phase was extracted with methylene chloride (90 g) and the lower organic phase recovered and combined with the lower phase previously set aside. This now combined ionic liquid phase was washed twice with 55 g of a solution of lithium TFSI salt in water having a mass fraction of the salt of 20 %, washed then with 40 g of a solution of lithium hydroxide in water having a mass fraction of solids of 5 % followed by a further washing step with 40 g of an aqueous solution of lithium hydroxide having a mass fraction of solids of 2.5 %. The ionic liquid phase was then washed ten times with 40 g portions of distilled water. After the final water wash the ionic liquid phase was washed with 84 g of hexane and the ionic liquid phase isolated. Volatiles were removed by distillation under reduced pressure, and the remaining ionic liquid was then dried for 3.5 hours at a temperature from 70 °C to 85 °C. In this manner 143 g (99 % of the theoretical yield) of product was recovered with a purity of 99 % (amount of substance fraction of the desired product) as determined by ³¹P-NMR.

The following chemical shift data have been found: ³¹P{1H}-NMR (dissolved in acetone-d6, 243 MHz) δ in ppm was 26.16 (s). For ¹H-NMR (dissolved in acetone-d6, 600 MHz) δ in ppm was 1.140 (d, 6H, 2J = 6.6 Hz), 2.076 (d, 9H, 2J = 14.4 Hz), 2.245 (m, 1H), 2.372 (dd, 2H). Using ¹⁹F-NMR (dissolved in acetone-d6, 565 MHz), δ in ppm was -79.89.

The following further substances can be synthesised according to this procedure:
trimethyl ethyl phosphonium TFSI salt
trimethyl n-propyl phosphonium TFSI salt
trimethyl iso-propyl phosphonium TFSI salt
trimethyl n-butyl phosphonium TFSI salt
trimethyl 1-methyl-n-propyl phosphonium TFSI salt (=trimethyl sec-butyl phosphonium)
trimethyl 2-methyl-n-propyl phosphonium TFSI salt (=trimethyl iso-butyl phosphonium)
trimethyl 1,1-dimethylethyl phosphonium TFSI salt (=trimethyl tert-butyl phosphonium)
trimethyl n-pentyl phosphonium TFSI salt
trimethyl 1-methyl-n-butyl phosphonium TFSI salt
trimethyl 2-methyl-n-butyl phosphonium TFSI salt
trimethyl 3-methyl-n-butyl phosphonium TFSI salt
trimethyl 1,1-dimethyl-n-propyl phosphonium TFSI salt
trimethyl 1,2-dimethyl-n-propyl phosphonium TFSI salt
trimethyl 2,2-dimethyl-n-propyl phosphonium TFSI salt (=trimethyl neopentyl phosphonium)
trimethyl 1-ethyl-n-propyl phosphonium TFSI salt
trimethyl n-hexyl phosphonium TFSI salt
trimethyl 1-methyl-n-pentyl phosphonium TFSI salt
trimethyl 2-methyl-n-pentyl phosphonium TFSI salt
trimethyl 3-methyl-n-pentyl phosphonium TFSI salt
trimethyl 4-methyl-n-pentyl phosphonium TFSI salt
trimethyl 1-ethyl-n-butyl phosphonium TFSI salt
trimethyl 2-ethyl-n-butyl phosphonium TFSI salt
trimethyl 1,1-dimethyl-n-butyl phosphonium TFSI salt
trimethyl 1,2-dimethyl-n-butyl phosphonium TFSI salt
trimethyl 2,2-dimethyl-n-butyl phosphonium TFSI salt
trimethyl 2,3-dimethyl-n-butyl phosphonium TFSI salt
trimethyl 3,3-dimethyl-n-butyl phosphonium TFSI salt
and the corresponding FSI salts,
trimethyl ethyl phosphonium FSI salt
trimethyl n-propyl phosphonium FSI salt
trimethyl iso-propyl phosphonium FSI salt
trimethyl n-butyl phosphonium FSI salt
trimethyl 1-methyl-n-propyl phosphonium FSI salt (=trimethyl sec-butyl phosphonium)
trimethyl 2-methyl-n-propyl phosphonium FSI salt (=trimethyl iso-butyl phosphonium)
trimethyl 1,1-dimethylethyl phosphonium FSI salt (=trimethyl tert-butyl phosphonium)
trimethyl n-pentyl phosphonium FSI salt
trimethyl 1-methyl-n-butyl phosphonium FSI salt
trimethyl 2-methyl-n-butyl phosphonium FSI salt
trimethyl 3-methyl-n-butyl phosphonium FSI salt
trimethyl 1,1-dimethyl-n-propyl phosphonium FSI salt
trimethyl 1,2-dimethyl-n-propyl phosphonium FSI salt
trimethyl 2,2-dimethyl-n-propyl phosphonium FSI salt (=trimethyl neopentyl phosphonium)
trimethyl 1-ethyl-n-propyl phosphonium FSI salt
trimethyl n-hexyl phosphonium FSI salt
trimethyl 1-methyl-n-pentyl phosphonium FSI salt
trimethyl 2-methyl-n-pentyl phosphonium FSI salt
trimethyl 3-methyl-n-pentyl phosphonium FSI salt
trimethyl 4-methyl-n-pentyl phosphonium FSI salt
trimethyl 1-ethyl-n-butyl phosphonium FSI salt
trimethyl 2-ethyl-n-butyl phosphonium FSI salt
trimethyl 1,1-dimethyl-n-butyl phosphonium FSI salt
trimethyl 1,2-dimethyl-n-butyl phosphonium FSI salt
trimethyl 2,2-dimethyl-n-butyl phosphonium FSI salt
trimethyl 2,3-dimethyl-n-butyl phosphonium FSI salt
trimethyl 3,3-dimethyl-n-butyl phosphonium FSI salt.

The carbon atom directly bound to the phosphorus atom in the organic phosphonium cation always counts as carbon atom of number 1.

Further mixed alkyl phosphonium salts were synthesised as detailed below.

### Example 2 Synthesis of dimethyl-dialkyl phosphonium salts

Using the process described in US patent 7,829,744 B2, dialkyl-phosphanes were methylated under a nitrogen blanket using trimethyl phosphate in stoichiometric excess (3.5 mol of trimethylphosphate for 1 mol of dialkylphosphane)at temperatures of from 100 °C to 170 °C. After about eight hours of reaction time, excess trimethyl phosphate was distilled off under reduced pressure of no more than 650 Pa (5 Torr), at 180 °C. Colourless liquids or solids were obtained. The identity of the desired reaction product, a mixture of dimethyl dialkyl phosphonium dimethyl phosphate and the dimethyl ester of phosphoric acid, was verified by recording ¹H-, ¹³C- and ³¹P-NMR spectra of the reaction products, and comparison of these with the standard spectra taken on purified substances of known composition.

In particular, di-iso-butyl(dimethyl)phosphonium 1,1,1-trifluoro-N-(trifluoromethylsulfonyl)-methanesulfonamide, [P(i-Bu)₂Me₂] [CF₃SO₂NSO₂CF₃] has been made from the precursor di-iso-butyl(dimethyl)phosphonium dimethylphosphate, [P(i-Bu)₂Me₂] [O=P(O)(OMe)₂], which was made according to the method described in US 7,829,744. 60 g of di-iso-butyl-(dimethyl)phosphonium dimethylphosphate were weighed into a 250 mL beaker. 53 g of a solution of lithium 1,1,1-trifluoro-N-(trifluoromethylsulfonyl) methanesulfonamide in water having a mass fraction of solids of 80 % were weighed into another beaker and added to the phosphate with stirring. 37 g of distilled water were used to rinse the weighing beaker, and then added to the reaction beaker. The reaction mixture was left to stir for forty minutes. Then, 87 g of dichloromethane were added and left to stir for further thirty minutes before being transferred to a separatory funnel. The two phases were separated and the lower ionic liquid phase returned to the separatory funnel. The ionic liquid phase was washed five times with 70 g portions of water. The ionic liquid phase was stripped of volatiles via vacuum distillation at 53.2 kPa (400 Torr) and 60 °C to remove the bulk solvent, then at below 666 Pa (< 5 Torr) and 70 °C for one hour. A clear and colourless liquid was isolated in a yield of 62 g (96 % of the theoretical mass). Spectroscopic analysis by NMR confirmed the structure of di-iso-butyl(dimethyl)phosphonium 1,1,1-trifluoro-N-(trifluoro-methylsulfonyl)methanesulfonamide: chemical shifts were measured for ³¹P {1H}-NMR (CDCl₃, 243 MHz) δ in ppm was found to be 26.63 (s). ¹H-NMR (CDCl₃, 600 MHz) δ in was found to be 1.036 (d, 12H, 2J = 6.0 Hz), 1.798 (d, 6H, 2J = 13.8 Hz), 2.012 (m, 2H), 2.063 (dd, 4H). In ¹⁹F-NMR (CDCl₃, 282 MHz), a chemical shift δ in ppm of -79.04 was measured.

The following dialkyl phosphanes can be used, following the procedure of this example, for methylation:
diethyl phosphane
ethyl n-propyl phosphane
ethyl isopropyl phosphane
ethyl isobutyl phosphane
ethyl tert-butyl phosphane
ethyl tert-amyl phosphane (ethyl 1,1-dimethyl propyl phosphane).

### Example 3

Physicochemical data were determined on several of the phosphonium salts of Examples 1 and 2.

The following table lists some of the characteristic data:

**Table 1**

| Phosphonium Salt Property | Unit | A | B | C | D |
|---|---|---|---|---|---|
| melting temperature | °C | 40 to 43 | 12 to 14 | 40 to 43 | 0 to 3 |
| Electrochem. Window | V | 5.7 to 6.1 (b) | -2.9 to 3 | 6.1 to 6.5 (b) | -2.6 to 2.8 |
| Viscosity at 20 °C | mPa·s | | 41.9 | | 33 (25 °C) |
| Viscosity at 50 °C | mPa·s | 29.9 | 18.4 | 25.6 | |
| Viscosity at 60 °C | mPa·s | 22.9 | 15.0 | 18.9 | |
| Viscosity at 70 °C | mPa·s | 16.6 | 12.5 | 14.5 | |
| Viscosity at 80 °C | mPa·s | 12.9 | nd | 11.5 | |
| Conductivity at 20 °C | S/m | 0.04 mS/m | 0.64 | 0.07 mS/m | 1.05 |
| Conductivity at 50 °C | S/m | 0.512 | 1.38 | 0.673 | nd |
| Conductivity at 60 °C | S/m | 0.688 | 1.71 | 0.913 | nd |
| Conductivity at 70 °C | S/m | 0.900 | 2.06 | 1.173 | nd |
| Conductivity at 80 °C | S/m | 1.140 | 2.43 | 1.461 | nd |
| Conductivity at 100 °C | S/m | nd | nd | nd | nd |
| Thermostability | °C | 420 | 325 | 414 | 283 |

| | | | | | |
|---|---|---|---|---|---|
| "nd" stands for "not determined". The data for the electrochemical window have been obtained by measuring the half cell potential against a glassy carbon work electrode (variant b; data for the range of measured half cell potential are given) or by measuring the whole interval against a Pt electrode and an Ag/Ag+ electrode (all other cases, window is from cathodic limit to anodic limit); data for conductivity were determined with a conductometer with a heated cell from ThermoFisher Scientific which had been calibrated using a potassium chloride reference; and as thermostability, the temperature was stated corresponding to a loss of 10 % of the mass during heating a sample under nitrogen atmosphere with a heating rate of 5 K/min. "A" is trimethyl-isobutylphosphonium 1,1,1-trifluoro-N-(trifluoromethylsulfonyl)methanesulfonamide; "B" is trimethyl-isobutylphosphonium N-fluorosulfonyl-fluorosulfonamide; "C" is trimethyl-n-propylphosphonium 1,1,1-trifluoro-N-(trifluoromethylsulfonyl)methane-sulfonamide; "D" is trimethyl-n-propylphosphonium N-fluorosulfonyl-fluorosulfonamide. | | | | | |

Binary mixtures of some of these salts in molar ratios of 25:75, 50:50 and 75:25 showed lower viscosity than both constituents alone, and when dissolved at the same total concentration of 1 mol/L, had surprisingly a higher conductivity than solutions of the constituents alone, and within the experimental variation, the same width of the electrochemical window as supra.

### Example 4

A lithium ion battery was prepared using lithium iron phosphate LiFePO₄ for the positive electrode, and lithium metal for the negative electrode. A fabric from woven ethylene-tetrafluorethylene copolymer was used as separator. An electrolyte was prepared from a solution of LiPF₆ in an ionic liquid which consisted of trimethyl n-propylphosphonium TFSI salt having a melting temperature of 43 °C, with a concentration of LiPF₆ of 0.5 mol/L. 65 g of this solution was diluted with a mixture of 30 g of ethylene carbonate and 5 g of fluoroethylene carbonate (4-fluoro-1,3-dioxolan-2-one). A total of 160 charge and discharge cycles were made that showed a specific capacity of 135 mA·h/g with recovery to the initial value after discharge cycles from C/12 to 2C.

### Example 5

Mixtures have been prepared from individual phosphonium salts, and melting temperature, viscosity and conductivity have been measured according to the accepted procedures in the field.

The results are summarised in Table 2:

**Table 2**

| Entry | Phosphonium Salt or Mixture | Tₘ/°C | η/(mPa·s) | σ/(S·m⁻¹) |
|---|---|---|---|---|
| D | trimethyl-n-propyl phosphonium N-fluorosulfonyl-fluorosulfonamide | 2.57 | 32.45 | 1.05 |
| E | dimethyl di-n-propyl phosphonium N-fluorosulfonyl-fluorosulfonamide | | 39.58 | 0.71 |
| D+E | n(D)/n(E)= 25 mol / 75 mol | < -22 | 38.55 | 0.79 |
| D+E | n(D)/n(E)= 50 mol / 50 mol | < -22 | 35.50 | 0.87 |
| D+E | n(D)/n(E)= 75 mol / 25 mol | -21 | 32.56 | 0.96 |
| B | trimethyl-isobutyl phosphonium N-fluorosulfonyl-fluorosulfonamide | 12.3 | 38.33 | 0.83 |
| D+B | n(D)/n(B)= 75 mol / 25 mol | < -22 | 31.71 | 0.90 |

| | | | | |
|---|---|---|---|---|
| Tₘ is the melting temperature η is the dynamic viscosity measured at 25 °C σ is the electrical conductivity defined as σ = l /(R·A), where l is the length of the specimen, R is the electrical resistance of the specimen, and A is the cross-sectional area of the specimen "E" is dimethyl di-n-propylphosphonium N-fluorosulfonyl-fluorosulfonamide, "B" and "D" are as above in Example 3 "< -22 °C" means that the mixture did not solidify when stored in a freezer at -22 °C) over a period of five days. | | | | |

It can be seen that mixtures provide a larger useful temperature window without sacrificing viscosity and conductivity. Electrochemical data have been determined for pure phosphonium salts as ionic liquids, and for mixtures of these. Table 3 lists the results.

**Table 3**

| Phosphonium Salt or mixture | ΔE /V | E_{c} /V | Eₐ/V |
|---|---|---|---|
| B | 5.9 | -2.9 | 3 |
| D | 5.38 | -2.6 | 2.78 |
| Blend D + E in 75 to 25 mol% ratio | 5.5 | -2.5 | 3 |

| | | | |
|---|---|---|---|
| ΔE electrochemical window E_{c}, Eₐ cathodic and anodic limit measured against a Ag⁺/Ag electrode | | | |

## Claims

1. A phosphonium salt of formula I
R¹ R² R³ R⁴ P⁺ A⁻ (Formula I)
where the anions A- are selected from the group consisting of N-fluorosulfonyl-fluorosulfonamide F- SO₂ - N⁻ - SO₂ - F, 1,1,1-trifluoro-N-(trifluoromethylsulfonyl)methanesulfonamide F₃C - SO₂ - N⁻ - SO₂ - CF₃, tetrafluoroborate BF₄⁻, hexafluorophosphate PF₆-, hexafluoroarsenate AsF₆⁻, hexafluoroantimonate SbF₆⁻, perchlorate ClO₄⁻, trifluoromethanesulfonate CF₃SO₃⁻, toluenesulfonate CH₃C₆H₄SO₃⁻, methanesulfonate CH₃SO₃⁻, iodide I⁻, tricyanomethanide (CN)₃C⁻, trifluoromethyltrifluoroborate CF₃BF₃⁻, heptafluoropropanesulfonate CF₃CF₂CF₂SO₃⁻, sulfate SO₄²⁻, difluoromethane sulfonate CHF₂ - SO₃⁻, trifluoroacetate CF₃COO⁻, heptafluorobutyrate CF₃CF₂CF₂COO⁻, and cyanocyanamide ⁻N(CN)₂, bis(oxalato)borate, (-OCOCOO-)₂B⁻, difluoro-(oxalato)borate, DFOB (-OCOCOO-)BF₂⁻, tris-(pentafluoroethyl)trifluorophosphate (CF₃CF₂)₃PF₃⁻, bis(difluoro-methylsulfonyl) amide (CHF₂SO₂)N⁻, 4,5-dicyano-2-(trifluoromethyl)-imidazolide TDI, dialkylphosphates, parti-cularly dimethylphosphate (CH₃O)₂P(O)O⁻, and phosphonate anions which are preferably alkyl alkane phosphonates and alkyl arylphosphonates, particularly methyl methanephosphonate (CH₃)(CH₃O)P(O)O⁻, and methyl benzenephosphonate (C₆H₅) (CH₃O)P(O)O⁻,
where the substituents
R¹ and R² are methyl groups,
R³ is selected from the group consisting of alkyl groups having from one to eight carbon atoms which may be linear, branched or cyclic, or may form a ring together with R⁴ including the phosphorus atom, and
R⁴ is selected from the group consisting of alkyl groups having from one to eight carbon atoms which may be linear, branched or cyclic, or may form a ring together with R³ including the phosphorus atom.

2. The phosphonium salts of claim 1 wherein R³ is different from R⁴.

3. The phosphonium salt of claim 1 wherein the cation is selected from the group consisting of trimethyl ethyl phosphonium, trimethyl n-propyl phosphonium, trimethyl iso-propyl phosphonium, trimethyl n-butyl phosphonium, trimethyl iso-butyl phosphonium, trimethyl sec-butyl phosphonium, trimethyl tert-butyl phosphonium, dimethyl diethyl phosphonium, dimethyl ethyl n-propyl phosphonium, dimethyl ethyl iso-propyl phosphonium, dimethyl ethyl n-butyl phosphonium, dimethyl ethyl iso-butyl phosphonium, dimethyl ethyl sec-butyl phosphonium, dimethyl ethyl tert-butyl phosphonium, dimethyl di-(n-propyl) phosphonium, dimethyl n-propyl iso-propyl phosphonium, dimethyl n-propyl n-butyl phosphonium, dimethyl n-propyl iso-butyl phosphonium, dimethyl n-propyl sec-butyl phosphonium, dimethyl n-propyl tert-butyl phosphonium, dimethyl di(iso-propyl) phosphonium, dimethyl iso-propyl n-butyl phosphonium, dimethyl iso-propyl iso-butyl phosphonium, dimethyl iso-propyl sec-butyl phosphonium, dimethyl iso-propyl tert-butyl phosphonium, dimethyl di-(n-butyl) phosphonium, dimethyl n-butyl iso-butyl phosphonium, dimethyl n-butyl sec-butyl phosphonium, dimethyl n-butyl tert-butyl phosphonium, dimethyl di-(iso-butyl) phosphonium, dimethyl iso-butyl sec-butyl phosphonium, dimethyl iso-butyl tert-butyl phosphonium, dimethyl di-(sec-butyl) phosphonium, dimethyl sec-butyl tert-butyl phosphonium, and dimethyl di-(tert-butyl) phosphonium.

4. The phosphonium salt of claim 1 wherein the cation is selected from the group consisting of trimethyl n-propyl phosphonium, trimethyl iso-propyl phosphonium, trimethyl n-butyl phosphonium, trimethyl iso-butyl phosphonium, trimethyl sec-butyl phosphonium, trimethyl tert-butyl phosphonium, dimethyl ethyl n-propyl phosphonium, dimethyl ethyl iso-propyl phosphonium, dimethyl ethyl n-butyl phosphonium, dimethyl ethyl sec-butyl phosphonium, dimethyl ethyl tert-butyl phosphonium, and dimethyl ethyl iso-butyl phosphonium.

5. The phosphonium salt of any preceding claim wherein the anion is tetrafluoroborate, BF₄⁻ or 1,1,1-trifluoro-N-(trifluoromethylsulfonyl)methanesulfonamide (CF₃-SO₂)₂N⁻, or N-fluorosulfonyl-fluorosulfonamide (F-SO₂)₂N⁻.

6. A mixture of at least two phosphonium salts of claim 1 having the same, or different anions selected from the group consisting of tetrafluoroborate BF₄⁻, hexafluorophosphate PF₆⁻, tricyanomethanide (CN)₃C⁻, trifluoromethylfluoroborate CF₃BF₃⁻, cyanocyanamide ⁻N(CN)₂, dialkylphosphates, phosphonates, 1,1,1-trifluoro-N-(trifluoromethylsulfonyl)methanesulfonamide (CF₃-SO₂)₂N⁻, and N-fluorosulfonyl-fluorosulfonamide (F-SO₂)₂N⁻, where the cations differ in at least one of R³ and R⁴.

7. The mixture of claim 6 comprising as cations a combination of one of the following:
trimethyl n-propyl phosphonium and trimethyl iso-propyl phosphonium,
trimethyl n-propyl phosphonium and trimethyl n-butyl phosphonium,
trimethyl n-propyl phosphonium and trimethyl iso-butyl phosphonium,
trimethyl iso-propyl phosphonium and trimethyl n-butyl phosphonium,
trimethyl iso-propyl phosphonium and trimethyl iso-butyl phosphonium,
either with the same anion selected from the group consisting of 1,1,1-trifluoro-N-(trifluoromethylsulfonyl)methanesulfonamide (CF₃-SO₂)₂N⁻, and N-fluorosulfonyl-fluorosulfonamide (F-SO₂)₂N⁻, tetrafluoroborate BF₄⁻, hexafluorophosphate PF₆-, tricyanomethanide (CN)₃C⁻, trifluoromethyltrifluoroborate CF₃BF₃⁻, cyanocyanamide (CN)₂N⁻, dialkylphosphates, and phosphonates, as well as mixture of these anions.

8. The mixture of claim 7 wherein the anion is tetrafluoroborate BF₄⁻, or 1,1,1-trifluoro-N-(trifluoromethylsulfonyl)methanesulfonamide (CF₃-SO₂)₂N⁻, or N-fluorosulfonyl-fluorosulfonamide (F-SO₂)₂N⁻.

9. An electrolyte comprising at least one of the phosphonium salts of claim 1, or a mixture of phosphonium salts of claim 6, at least one organic solvent selected from the group consisting of cyclic alkylene carbonates having from two to ten carbon atoms in the alkylene group, and from dialkyl carbonates R⁵-O-CO-O-R⁶, where R⁵ and R⁶ are independently selected from the group consisting of alkyl groups having from one to ten carbon atoms, with the sum of the number of carbon atoms in R⁵ and R⁶ being preferably at least three.

10. The electrolyte of claim 9 which additionally comprises a lithium salt with an anion selected from the group consisting of tetrafluoroborate, trifluoromethanesulfonate, hexafluorophosphate, 1,1,1-trifluoro-N-(tri-fluoromethylsulfonyl)methanesulfonamide (CF₃-SO₂)₂N⁻, and N-fluorosulfonyl-fluorosulfonamide (F-SO₂)₂N⁻, tricyanomethanide (CN)₃C⁻, trifluoromethyltrifluoroborate CF₃BF₃⁻, and cyanocyanamide (CN)₂N⁻.

11. A battery comprising an anode, and a cathode as electrodes, a separator between the anode and the cathode, and an electrolyte according to claim 9 or claim 10, wherein the electrolyte additionally comprises a mass fraction of from 0.1 % to 20 % of a fluorinated compound selected from the group consisting of fluorinated cyclic alkylene carbonates having from two to ten carbon atoms in the fluorinated alkylene group, and from fluorinated dialkyl carbonates R⁷-O-CO-O-R⁸, where R⁷ and R⁸ are independently selected from the group consisting of non-fluorinated and fluorinated alkyl groups having from one to ten carbon atoms, at least one of R⁷ and R⁸ being fluorinated, with the sum of the number of carbon atoms in R⁷ and R⁸ preferably being at least three.

12. The battery of claim 11 wherein carbon or a mixture having a mass fraction of at least 5 % of carbon, is used as material for at least one of the electrodes.

13. An electrochemical capacitor comprising electrodes, a separator, and an electrolyte which comprises at least one phosphonium salt of any of claims 1 to 5 or a mixture of phosphonium salts of any of claims 6 to 8.

14. The electrochemical capacitor of claim 13 wherein the electrodes comprise carbon or a carbonaceous material.

15. The electrochemical capacitor of claim 13 wherein the electrodes comprise metal oxides, or conducting polymers.

16. The electrochemical capacitor of claim 12 wherein the electrodes are made from different materials, and one of them is made from carbon or carbonaceous materials.
